# EUROPEAN PATENT APPLICATION

(11) **EP 1 780 588 A1**
(43) Date of publication of application: **02.05.2007**
(21) Application number: 06122919.1
(22) Date of filing: 25.10.2006
(51) Int. Cl.: G02F 1/1345

(54) **Liquid crystal display device**

(30) Priority: 25.10.2005 KR 20050100825
(71) Applicant: LG. Philips LCD Co., Ltd., Seoul (KR)
(72) Inventor: Hong, Jin Cheol, Gyeongsangbuk-do (KR); Kim, Min Hwa, Gyeongsangbuk-do (KR)
(74) Representative: Viering, Jentschura & Partner

(57) **Abstract**

An LCD is disclosed, in which pad pitches of a data driving block are optimized by a differential design to thereby prevent misalignment, the LCD device comprising a liquid crystal panel (40) which includes lower (31) and upper (30) substrates, and a liquid crystal layer provided between the lower (31) and upper (30) substrates; a gate driving block (32) which is provided with a plurality of gate drivers in an edge area of the lower substrate (31); a data driving block (35) which is provided with a plurality of data drivers connected with the lower substrate and a source PCB (34) by respective data TCPs (33); and a data pad unit (39) which is provided on each data TCP (33), wherein pitches of data pads in the data pad unit (39) are differentially designed in respective portions of the data TCP (33) to thereby transmit a data signal of the data driving block (35) to a data line of the liquid crystal panel (40).

## Description

This application claims the benefit of the Korean Patent Application No. P2005-100825, filed on October 25, 2005, which is hereby incorporated by reference as if fully set forth herein.

### BACKGROUND OF THE INVENTION

### Field of the Invention

The present invention relates to a liquid crystal display (LCD) device, and more particularly, to an LCD device in which pad pitches of a data driving block are optimized by a differential design, to thereby prevent misalignment.

### Discussion of the Related Art

With development of information society, demands for various display devices increase. Accordingly, many efforts have been made to research and develop various flat display devices, for example, a liquid crystal display (LCD) device, a plasma display panel (PDP), an electroluminescent display (ELD), and a vacuum fluorescent display (VFD), and some species of the flat display devices are already applied to displays of various equipments.

Among the various flat display devices, the LCD device has been most widely used due to the advantageous characteristics of compact size, thin profile, and low power consumption, whereby the LCD device substitutes for a cathode ray tube (CRT). In addition to the mobile type LCD device such as a display for a notebook computer, the LCD device has been developed for computer monitors and televisions to receive and display broadcasting signals.

Hereinafter, a related art LCD device will be explained with reference to the accompanying drawings.

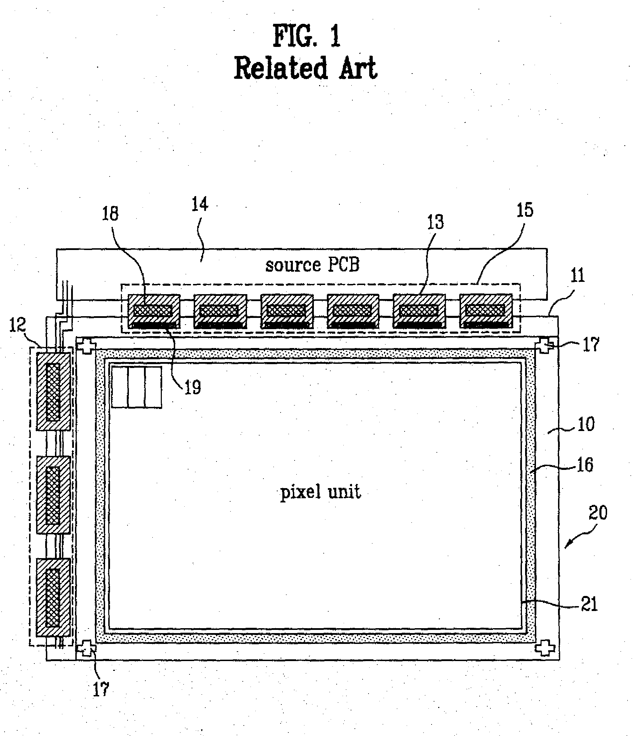

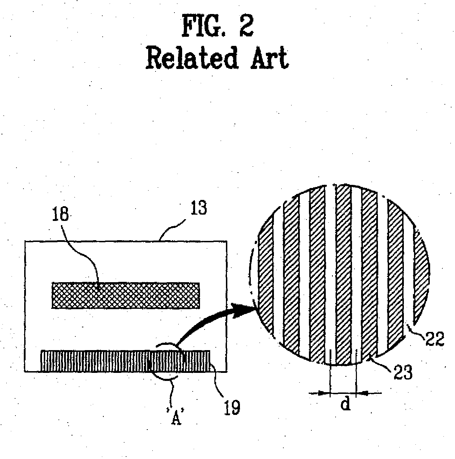

FIG. 1 is a layout of a related art LCD device. FIG. 2 is a plane view of illustrating a pitch of a data driving block in a related art LCD device.

As shown in FIGs. 1 and 2, the related art LCD device includes a liquid crystal panel 20 which is comprised of lower and upper substrates 11 and 10, and a liquid crystal layer (not shown) provided between the lower and upper substrates 11 and 10; a gate driving block 12 which is comprised of a plurality of gate drivers in the edge of the lower substrate 11; a data driving block 15 which is comprised of a plurality of drivers connected with a source PCB 14 by respective data TCPs 13; and a seal line 16 which is provided in the margin of the lower and upper substrates 11 and 10 to bond the lower and upper substrates 11 and 10 to each other.

In the above structure, an IC connects the gate driving block 12 to the data driving block 15, wherein the IC is provided by flexible printed circuit (FPC) or chip on film (COF). FIG. 1 illustrates the example using the gate COF.

Further, a timing controller (not shown) is provided to supply control signals and video information to the gate driving block 12 and the data driving block 15.

The liquid crystal panel 20 includes a pixel unit 21 which displays images; a plurality of gate and data lines formed perpendicularly in a matrix configuration on the lower substrate 11 to thereby define pixel regions; a plurality of pixel electrodes respectively formed in the pixel regions defined by the gate and data lines; and a plurality of thin film transistors formed adjacent crossings of the gate and data lines to thereby apply a signal of the data line to each pixel electrode in accordance with a signal of the gate line.

Each thin film transistor is comprised of a gate electrode which protrudes from one side of the gate line; a gate insulating layer which is formed on an entire surface of the lower substrate including the gate electrode; an active layer which is overlapped with the gate electrode; a source electrode which is overlapped with one side of the data line and one side of the gate electrode; and a drain electrode which is provided at a predetermined interval from the source electrode.

Then, a passivation layer is formed on the lower substrate including the data line, wherein the passivation layer includes a first contact hole provided in a predetermined portion corresponding to the drain electrode. Through the first contact hole of the passivation layer, the drain electrode is in contact with the pixel electrode.

Although not shown, the upper substrate 10 includes a color filter layer which is separately provided in each pixel region by a black matrix layer; and a common electrode which is provided in correspondence with the pixel electrode of the lower substrate 11.

In the LCD device having the above structure, liquid crystal molecules of the liquid crystal layer are driven according as a voltage is applied to the common and pixel electrodes provided between the lower and upper substrate 11 and 10.

The data driving block 15 includes a data pad unit 19 which transmits the data signal to the data line of the liquid crystal panel 20.

As shown in FIG. 2, the data pad unit 19 has the same pitch on each data TCP 18. That is, the data pad unit 19 is comprised of a plurality of data pads 23 provided in the same width and interval.

In FIG. 1, a non-explained reference numeral '18' represents a data chip.

However, when each data TCP 13 of the data driving block 15 is bonded to the pad of the lower substrate 11 in state of the data pad unit 19 having the same pitch, the misalignment may be generated due to the difference of partial expansion in the data pad unit 19.

### SUMMARY OF THE INVENTION

Accordingly, the present invention is directed to an LCD device, which substantially obviates one or more problems due to limitations and disadvantages of the related art.

An object of the present invention is to provide an LCD device in which pad pitches of a data driving block are optimized by a differential design, to thereby prevent misalignment.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an LCD device comprises a liquid crystal panel which includes lower and upper substrates, and a liquid crystal layer provided between the lower and upper substrates; a gate driving block which is provided with a plurality of gate drivers in an edge area of the lower substrate; a data driving block which is provided with a plurality of data drivers connected with the lower substrate and a source PCB by respective data TCPs; and a data pad unit which is provided on each data TCP, wherein pitches of data pads in the data pad unit are differentially designed in respective portions of the data TCP to thereby transmit a data signal of the data driving block to a data line of the liquid crystal panel.

At this time, the pitches of data pads are designed to be increased gradually as going to a side portion of the data TCP from a central portion of the data TCP.

Also, an interval between the data pads in the central portion of the data TCP is smaller than an interval between the data pads in the side portion of the data TCP.

Also, pitches of data pads in the data pad unit are increased in shape of arc as going to a side portion of the data TCP from a central portion of the data TCP to thereby transmit a data signal of the data driving block to a data line of the liquid crystal panel.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a layout of a related art LCD device;

FIG. 2 is a plane view of illustrating a pitch of a data driving block in a related art LCD device;

FIG. 3 is a layout of an LCD device according to the preferred embodiment of the present invention;

FIG. 4 is a plane view of illustrating a pitch of a data driving block in an LCD device according to the preferred embodiment of the present invention; and

FIG. 5 is a graph of illustrating a pitch design in a pad according to the first and second embodiments of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, an LCD device according to the preferred embodiment of the present invention will be explained with reference to the accompanying drawings.

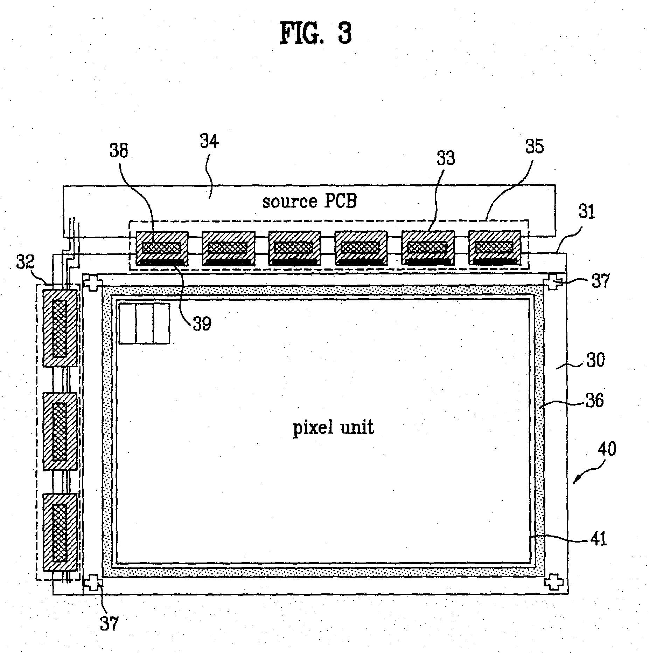

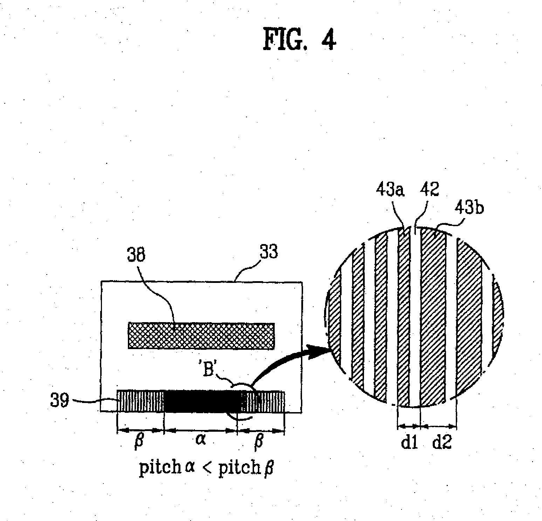

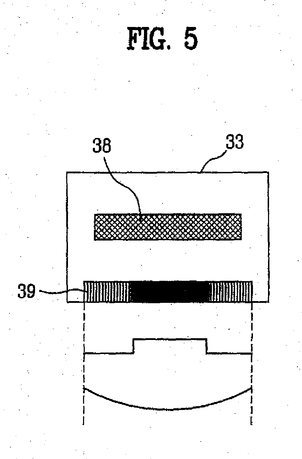

FIG. 3 is a layout of an LCD device according to the preferred embodiment of the present invention. FIG. 4 is a plane view of illustrating a pitch of a data driving block in an LCD device according to the preferred embodiment of the present invention. FIG. 5 is a graph of illustrating a pitch design in a pad according to the first and second embodiments of the present invention.

As shown in FIGs. 3 and 4, the LCD device according to the preferred embodiment of the present invention includes a liquid crystal panel 40 which is comprised of lower and upper substrates 31 and 30, and a liquid crystal layer (not shown) provided between the lower and upper substrates 31 and 30; a gate driving block 32 which is comprised of a plurality of gate drivers in an edge area of the lower substrate 31; a data driving block 35 which is comprised of a plurality of drivers connected with a source PCB 34 by respective data TCPs 33; and a seal line 36 which is provided in the margin of the lower and upper substrates 31 and 30 to bond the lower and upper substrates 31 and 30 to each other.

In the above structure, an IC connects the gate driving block 32 to the data driving block 35, wherein the IC is provided by flexible printed circuit (FPC) or chip on film (COF). FIG. 3 illustrates the example using the gate COF.

Further, a timing controller (not shown) is provided to supply control signals and video information to the gate driving block 32 and the data driving block 35.

In the above liquid crystal panel 40, there is a pixel unit 40 which displays images. Although not shown, there are a plurality of gate and data lines formed perpendicularly in a matrix configuration on the lower substrate 31 to thereby define pixel regions; a plurality of pixel electrodes respectively formed in the pixel regions defined by the gate and data lines; and a plurality of thin film transistors formed adjacent crossings of the gate and data lines to thereby apply a signal of the data line to each pixel electrode in accordance with a signal of the gate line.

Each thin film transistor is comprised of a gate electrode which protrudes from one side of the gate line; a gate insulating layer which is formed on an entire surface of the lower substrate including the gate electrode; an active layer which is overlapped with the gate electrode; a source electrode which is overlapped with one side of the data line and one side of the gate electrode; and a drain electrode which is provided at a predetermined interval from the source electrode.

Then, a passivation layer is formed on the lower substrate including the data line, wherein the passivation layer includes a first contact hole provided in a predetermined portion corresponding to the drain electrode. Through the first contact hole of the passivation layer, the drain electrode is in contact with the pixel electrode.

Although not shown, the upper substrate 30 includes a color filter layer which is separately provided in each pixel region by a black matrix layer; and a common electrode which is provided in correspondence with the pixel electrode of the lower substrate 31.

In the LCD device having the above structure, liquid crystal molecules of the liquid crystal layer are driven according as a voltage is applied to the common and pixel electrodes provided between the lower and upper substrate 31 and 30.

The above description shows only one example of the lower and upper substrates 31 and 30, which is not limited to this.

The data driving block 45 includes a data pad unit 39 which transmits a data signal to the data line of the liquid crystal panel 40. Also, a non-explained reference numeral '38' represents a data chip.

In case of the data pad unit 39 provided in each data TCP 33, pitches of data pads 42 are differentially designed in respective portions of the data TCP 33.

In detail, the data pad unit 39 is provided with the plurality of data pads 42 arranged at a fixed width. As going to the side portion from the central portion of the data TCP 33, the interval between the data pads 42 is increased gradually.

That is, if the central portion of the data pad unit 39 is defined as 'α', and the both side portions of the data TCP 33 are defined as 'β', a pitch α is smaller than a pitch *β*. Accordingly, the interval 43a between the data pads 42 in the central portion of the data TCP 33 is smaller than the interval 43b between the data pads 42 in the side portion of the data TCP 33. In FIG. 4, 'dl' corresponds to the pitch of 'α', and 'd2' corresponds to the pitch of 'β'.

In each data TCP 33, the pitch of data pad 42 is relatively large in the side portion of the data TCP 33 which has the poor alignment, and the pitch of data pad 42 is relatively smaller in the central portion of the data TCP 33 which has the good alignment, so that it is possible to compensate for the misalignment which may be generated in the fine-pitch design. Accordingly, the entire size of the data driving block is decreased with the differently designed pitch, thereby decreasing the fabrication cost.

As shown in FIG. 5, in state of that each data pad unit 39 is defined with the central portion and the side portion, the pitch of data pad unit 39 is differently designed in the central portion and the side portion. That is, the pitch of the side portion is larger than the pitch of the central portion. In this case, the portion division of the data pad unit can be variable arbitrarily.

Also, as shown in FIG. 5, it is possible to increase the pitches of data pad unit in shape of arc as going to the side portion from the central portion of the data pad unit.

As mentioned above, the LCD device according to the present invention has the following advantages.

In the LCD device according to the present invention, the pitch of data pad is increased as going to the side portion from the central portion of the data pad unit, so that it is possible to compensate for the misalignment caused in the fine pitch.

As the pitch of data pad is differently designed in the respective portions of the data pad unit. Thus, the entire size of the data driving block is decreased with the differently designed pitch, thereby decreasing the fabrication cost.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. An LCD device comprising:
a liquid crystal panel which includes lower and upper substrates, and a liquid crystal layer provided between the lower and upper substrates;
a gate driving block which is provided with a plurality of gate drivers in an edge area of the lower substrate;
a data driving block which is provided with a plurality of data drivers connected with the lower substrate and a source PCB by respective data TCPs; and
a data pad unit which is provided on each data TCP, wherein pitches of data pads in the data pad unit are differentially designed in respective portions of the data TCP to thereby transmit a data signal of the data driving block to a data line of the liquid crystal panel.

2. The LCD device of claim 1, wherein the pitches of data pads are designed to be increased gradually as going to a side portion of the data TCP from a central portion of the data TCP.

3. The LCD device of claim 2, wherein an interval between the data pads in the central portion of the data TCP is smaller than an interval between the data pads in the side portion of the data TCP.

4. The LCD device of claim 1, wherein an IC which connects the gate driving block to the data driving block is provided by flexible printed circuit (FPC) or chip on film (COF).

5. The LCD device of claim 1, wherein the data pads are provided at a fixed width.

6. The LCD device of claim 1, further comprising a seal line which is provided in the margin of the lower and upper substrates to bond the lower and upper substrates to each other.

7. An LCD device comprising:
a liquid crystal panel which includes lower and upper substrates, and a liquid crystal layer provided between the lower and upper substrates;
a gate driving block which is provided with a plurality of gate drivers in an edge area of the lower substrate;
a data driving block which is provided with a plurality of data drivers connected with the lower substrate and a source PCB by respective data TCPs; and
a data pad unit which is provided on each data TCP, wherein pitches of data pads in the data pad unit are increased in shape of arc as going to a side portion of the data TCP from a central portion of the data TCP to thereby transmit a data signal of the data driving block to a data line of the liquid crystal panel.

8. The LCD device of claim 7, wherein an interval between the data pads in the central portion of the data TCP is smaller than an interval between the data pads in the side portion of the data TCP.

9. The LCD device of claim 7, wherein an IC which connects the gate driving block to the data driving block is provided by flexible printed circuit (FPC) or chip on film (COF).

10. The LCD device of claim 7, wherein the data pads are provided at a fixed width.
